# EUROPÄISCHE PATENTANMELDUNG

(11) **EP 1 970 153 A1**
(43) Veröffentlichungstag der Anmeldung: **17.09.2008**
(21) Anmeldenummer: 07012516.6
(22) Anmeldetag: 26.06.2007
(51) Int. Cl.: B23K 7/06

(54) **Vorrichtung und Verfahren für autogene Prozesse**

(30) Priorität: 13.03.2007 DE 102007012082; 13.03.2007 DE 102007012083
(71) Anmelder: Linde Aktiengesellschaft, 80807 München (DE)
(72) Erfinder: Plebuch, Franz-Clemens, 86854 Amberg (DE)

(57) **Zusammenfassung**

Die vorliegende Erfindung betrifft eine mindestens einer Düse oder einem Brennerkopf (10) einer zum Be- oder Verarbeiten mindestens eines Bauteils oder Werkstücks (B) mittels autogener Prozesse vorgesehenen Vorrichtung (100) zuordbare Hüllgaseinrichtung (20) zum Führen mindestens eines Hüllgases (H), mit dem mindestens eine aus der Düse oder dem Brennerkopf (10) in Richtung des Bauteils oder Werkstücks (B) austretende Flamme (F) zumindest teilweise umhüllbar ist.

Die vorliegende Erfindung betrifft des Weiteren ein der Hüllgaseinrichtung (20) zugeordnetes Verfahren zum Be- oder Verarbeiten mindestens eines Bauteils oder Werkstücks (B) mittels autogener Prozesse.

Mit Vorteil ist mittels des Hüllgases (H) die im Abgas der Vorrichtung (100) enthaltene Schadstoffkonzentration, insbesondere die Konzentration an Stickoxiden (NOₓ), reduzierbar und die Prozessgeschwindigkeit des autogenen Prozesses deutlich verringerbar.

## Beschreibung

### Technisches Gebiet

Die vorliegende Erfindung betrifft das technische Gebiet der Bearbeitung oder Verarbeitung von Bauteilen oder von Werkstücken mittels autogener Prozesse.

### Stand der Technik

Auf dem technischen Gebiet der Autogentechnik sind als verschiedene Flammprozesse, wie das Richten, das Schneiden, das Wärmen, das Löten oder das Fugenhobeln mit einer Flamme, seit langem eingesetzte, manuell handhabbare oder maschinell automatisierbare Prozesse, mittels derer Bauteile oder Werkstücke bearbeitet oder verarbeitet werden können.

Als Flamme wird dazu eine Flamme verwendet, die aus einem Brenngas oder einem Brenngasgemisch und einem Oxidator entsteht. Als Brenngas werden meist die Gase Acetylen, Methan, Ethen, Propen oder Methylacetylen oder Gasgemische daraus verwendet. Jedoch können auch andere als diese marktüblichen und für die verarbeitende Industrie wichtigen Brennstoffe verwendet werden. Von allen Brenngasen weist Acetylen die höchste Flammtemperatur auf. Als Oxidator wird Sauerstoff oder auch Luft eingesetzt.

Autogene Prozesse sind Verfahren, bei welchen mit einer Flamme gearbeitet wird. So dient beispielsweise das Flammrichten dem Beseitigen von Formveränderungen, die sich im Herstellungsprozess von Bauteilen oder Werkstücken ergeben. Wie etwa dem "Handbuch der Flammrichttechnik", Fachbuchreihe Schweißtechnik, Band 124, DVS-Verlag, Düsseldorf 1995 oder dem Prospekt "Tipps für Praktiker. Flammrichten." (Ausgabe Juni 2005) der Firma Linde entnehmbar ist, wird das Bauteil oder Werkstück beim Flammrichten erwärmt. Dadurch werden unerwünschte Formveränderungen aufgehoben.

Das autogene Brennschneiden gehört zu den thermischen Trennverfahren. Unter Flammwärmen wird das örtliche Erwärmen zur Umformung von Bauteilen verstanden. Flammlöten ist ein Fügeprozess, bei dem eine Verbindung mittels Lots hergestellt wird. Fugenhobeln ist ein Verfahren um fehlerhafte Schweißnahtverbindungen zu beseitigen.

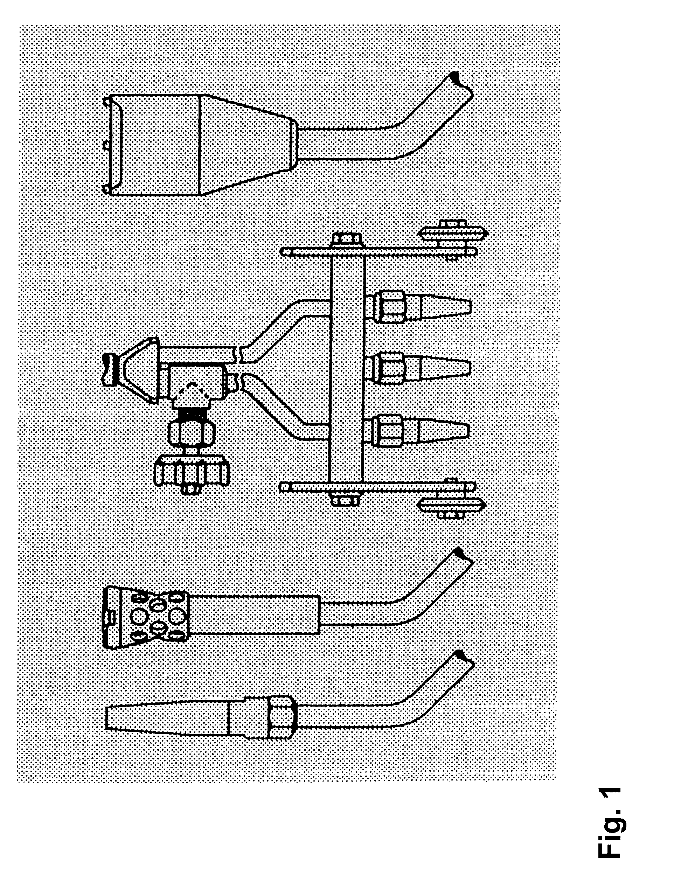

Hinsichtlich der bei autogen Prozessen eingesetzten Ausrüstung werden Brenner in Abhängigkeit vom jeweiligen Anwendungsfall und in Abhängigkeit von der Dicke des Bauteils oder Werkstücks verwendet (vgl. Fig. 1), wie Einflammen- oder Eindüsenbrenner oder Flammenbrenner, bei welchen mehrere, aus einem Brennerkopf austretende Einzelflammen eine einzige, gemeinsame Flamme ergeben, oder Mehrdüsenbrenner, bei welchen mehrere Düsen jeweils eine Flamme aufweisen oder auch Sonderbrenner.

Bei den vorbeschriebenen, von Hand oder maschinell geführten Prozessen der Autogentechnik, bei denen offene Flammen, insbesondere offene Brenngas-Sauerstoff-Flammen oder offene Brenngas-Luft-Flammen zum Einsatz kommen, erscheint eine Reduzierung der im Abgas des Brenners enthaltenen Schadstoffkonzentration, insbesondere der Konzentration an Stickstoffoxiden (NOₓ), wie etwa an giftigem Stickstoffmonoxid (NO) und/oder Stickstoffdioxid (NO₂) und an anderen schädlichen Verbindungen, erstrebenswert, nicht zuletzt um bestehende Schadstoffgrenzwerte einzuhalten und damit einhergehend die Schadstoffemissionen sowie die Umweltbelastung zu minimieren und auf diese Weise gesundheitliche Belastungen des Bedieners des Brenners weitestgehend auszuschließen. Weiterhin erscheint eine Optimierung der verwendeten Brenner erstrebenswert, nicht zuletzt um durch eine Verbesserung des Wärmeübergangs auf das Bauteil oder Werkstück eine Erhöhung der Verfahrensgeschwindigkeit und damit einhergehend eine Verkürzung der Prozesszeiten sowie eine höhere Effizienz und Wirtschaftlichkeit der autogenen Prozesse zu bewirken.

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, eine zum Be- oder Verarbeiten mindestens eines Bauteils oder Werkstücks mittels autogener Prozesse vorgesehene Vorrichtung sowie ein Verfahren zum Be- oder Verarbeiten mindestens eines Bauteils oder Werkstücks mittels autogener Prozesse so weiterzubilden, dass eine Reduzierung der Schadstoffkonzentration, insbesondere der Konzentration an Stickoxiden (NOₓ) und anderer schädlichen Verbindungen, erzielt wird.Weiterhin liegt der vorliegenden Erfindung die Aufgabe zugrunde, eine zum Be- oder Verarbeiten mindestens eines Bauteils oder Werkstücks mittels autogener Prozesse vorgesehene Vorrichtung sowie ein Verfahren zum Be- oder Verarbeiten mindestens eines Bauteils oder Werkstücks mittels autogener Prozesse so weiterzubilden, dass eine Verkürzung der Prozesszeiten sowie eine höhere Effizienz und Wirtschaftlichkeit erzielt werden.

Diese Aufgabe wird durch eine Hüllgaseinrichtung mit den im Anspruch 1 angegebenen Merkmalen, durch eine Vorrichtung mit den im Anspruch 6 angegebenen Merkmalen sowie durch ein Verfahren mit den im Anspruch 8 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Mithin basiert die vorliegende Erfindung auf der Bereitstellung einer Hüllgaseinrichtung zur zumindest teilweisen Umhüllung der Flamme des autogenen Prozesses. Das erfindungsgemäße Verfahren beinhaltet somit, dass die Flamme des autogenen Prozesses zumindest teilweise von einem Hüllgas umhüllt wird.

Mittels dieser Hüllgaseinrichtung kann mindestens ein Hüllgas so geführt werden, dass dieses Hüllgas nach Art mindestens eines Gasvorhangs mindestens eine aus dem Brenner in Richtung des Bauteils oder Werkstücks austretende Flamme, zumindest teilweise umhüllt. Besonders von Vorteil ist eine vollständige Umhüllung der Flamme.

In vorteilhafter Weise kann es sich beim im Zwischenraum zwischen der Außenwand der Düse und der Innenwand der Hüllgaseinrichtung geführten Hüllgas oder Vorhanggas (im Sinne eines einen Vorhang erzeugenden Gases) um mindestens ein Gas oder eine Gasmischung aus der Gruppe der Gase Argon, Sauerstoff, Kohlendioxid, Helium, Stickstoff und Wasserstoff oder deren Gemische handeln. Auch kann es von Vorteil sein, dass eine Gasmischung zum Einsatz kommt, die normalerweise als Formiergas oder als Schweißschutzgas dient. Andere inerte Gase, wie beispielsweise Neon sind ebenfalls möglich.

Das Abschotten der aus der Düse in Richtung des Bauteils oder Werkstücks austretenden Flamme mittels des in Form des Hüllgases erzeugten Gasevorhangs bewirkt, dass die Flamme konzentrierter auf das Bauteil oder Werkstück einwirken kann. Somit wird die Flamme mittels der Hüllgaseinrichtung, die auch als Hüllstromeinrichtung bezeichnet werden kann, konzentriert.

Gemäß einer besonders erfinderischen Weiterbildung kann mittels des Hüllgases die im Abgas der Vorrichtung enthaltene Schadstoffkonzentration, insbesondere die Konzentration an Stickstoffoxiden (NOₓ), wie etwa an giftigem Stickstoffmonoxid (NO) und/oder Stickstoffdioxid (NO₂) und anderen unerwünschten Verbindungen, reduziert werden, indem die Flamme durch das Hüllgas abgeschottet wird und durch dieses Abschotten der Flamme der Eintrag von Atmosphäre weitestgehend bis vollständig verhindert wird. In diesem Zusammenhang ermöglicht die vorliegende Erfindung eine
- sowohl der Gesundheit des Bedieners des Brenners
- als auch der Einhaltung von Grenzwerten
zuträgliche Schadstoffminimierung.

Gemäß einer besonders erfinderischen Weiterbildung kann mittels des Hüllgases der Wärmeübergang oder Wärmeübertrag auf das Bauteil oder Werkstück beschleunigt und auf diese Weise der Einsatz des Brenners optimiert werden, indem die Flamme durch das Hüllgas konzentriert wird und Wechselwirkungen der Flamme mit der Atmosphäre unterbunden werden. Eine derartige Verbesserung des Wärmeübergangs bewirkt also eine Verkürzung der Bearbeitungszeiten, das heißt die Prozesszeit bei autogenen Prozessen kann erfindungsgemäß verringert werden. Durch eine derartige Erhöhung der Verfahrensgeschwindigkeit werden autogene Prozesse effizienter und wirtschaftlicher. Insbesondere ist die Prozessgeschwindigkeit des autogenen Prozesses um mindestens ein Drittel, vorzugsweise um mindestens die Hälfte verringerbar. Infolgedessen werden die die Fertigungszeiten, zum Beispiel im Rohrleitungsbau, im Schiffbau oder im Stahlbau, verkürzt und der Produktdurchsatz beschleunigt.

Für die Hüllgaseinrichtung sind verschiedene vorteilhafte Ausgestaltungen möglich. Gemeinsam ist diesen Ausgestaltungen, dass das Hüllgas, insbesondere zwischen Brenneraußenseite und Innenseite der Hüllgaseinrichtung, derart geführt werden kann, dass die Brenngas(gemisch)flamme zumindest teilweise, jedoch zweckmäßigerweise möglichst vollständig vom durch das Hüllgas gebildeten Gasvorhang eingeschlossen wird.

Die jeweilige konkrete Form der Hüllgaseinrichtung ist auch davon abhängig, wie intensiv die Flamme umhüllt werden soll. Um beispielsweise eine besonders intensive und stabile Ummantelung der Flamme zu gewährleisten, ist der Einsatz einer Hüllgaseinrichtung nach Art eines geschlossenen Hohlzylinders von besonderem Vorteil. Besonders vorteilhaft ist es dabei, einen Hohlzylinder oder ein Rohr über den Brenner oder zumindest über den Brennerkopf oder die Düse zu führen. Vorteilhafterweise ist das Rohr zum Werkstück hin ganz offen. Möglich ist auch, dass an der Seite zum Bauteil hin ein Netz oder ein mit Bohrungen versehener Boden angebracht ist. In einer anderen zweckmäßigen Ausgestaltung kann die Hüllgaseinrichtung auch ein Ring sein, der den Brenner oder die Flamme umgibt und aus welchem das Hüllgas ausströmt und den Gasvorhang bildet.

In einer bevorzugten Ausgestaltung kann auch eine oder mehrere weitere Hüllgaseinrichtung, insbesondere eine zweite Hüllgaseinrichtung zum Einsatz gelangen, wobei in zweckmäßiger Weise die erste Hüllgaseinrichtung und die zweite Hüllgaseinrichtung konzentrisch angeordnet sind. Eine derartige zweite Hüllgaseinrichtung ist insbesondere dann von Nutzen, wenn mit verschiedenen Arten von Hüllgas und/oder mit unterschiedlichen Strömungsgeschwindigkeiten des jeweiligen Hüllgases und demzufolge mit mehr als einem Gasvorhang gearbeitet wird, zum Beispiel um ein besonders hohes Maß an Abschottung der Flamme zu erzielen.

In besonders vorteilhafter Weise ist
- beim Einflammen- oder Eindüsenbrenner der Düse eine Hüllgaseinrichtung zugeordnet,
- beim Flammenbrenner, bei dem viele kleine Einzelflammen eine aus dem Brennerkopf austretende Flamme bilden, dem Brennerkopf eine Hüllgaseinrichtung zugeordnet zugeordnet,
- beim Mehrdüsenbrenner, insbesondere beim Mehrdüsenrichtbrenner jeder der mehreren Düsen jeweils eine eigene Hüllgaseinrichtung zugeordnet und
- beim Sonderbrenner dem Brennerkopf eine Hüllgaseinrichtung zugeordnet ist.

Die vorliegende Erfindung betrifft schließlich die Verwendung mindestens einer Hüllgaseinrichtung gemäß der vorstehend dargelegten Art und/oder mindestens einer Vorrichtung gemäß der vorstehend dargelegten Art in der Autogentechnik, so etwa beim Bearbeiten oder Verarbeiten eines Bauteils oder Werkstücks
- mittels Flammrichten,
- mittels Brennschneiden oder
- mittels Flammwärmen oder
- mittels Flammlöten
- mittels Fugenhobeln.

### Kurze Beschreibung der Zeichnungen

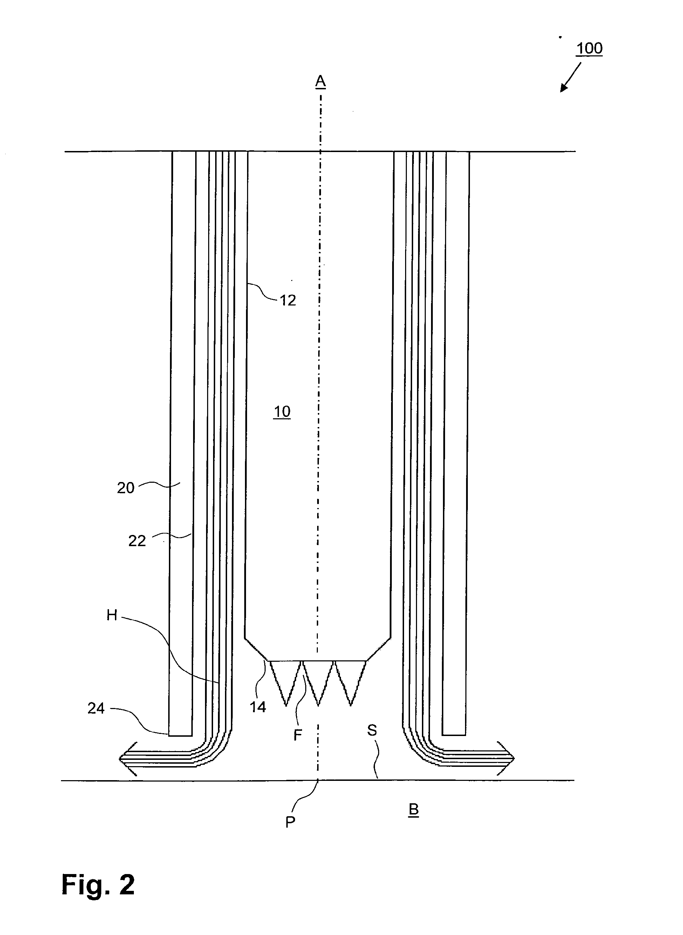

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 sowie dem Anspruch 6 nachgeordneten Ansprüche verwiesen, andererseits werden weitere Ausgestaltungen, Merkmale und Vorteile der vorliegenden Erfindung nachstehend unter Anderem anhand des durch Fig. 2 veranschaulichten Ausführungsbeispiels näher erläutert.

Es zeigt:
- Fig. 1: in schematischer Darstellung verschiedene Ausführungsbeispiele für konventionelle Flammvorrichtungen nach Art eines Einflammen- bzw. Eindüsenbrenners, eines Flammenbrenners, eines umschaltbaren Dreidüsenbrenners und eines Sonderbrenners; und
- Fig. 2: in schematischer Darstellung ein Ausführungsbeispiel für eine Vorrichtung gemäß der vorliegenden Erfindung, die eine Hüllgaseinrichtung gemäß der vorliegenden Erfindung aufweist und nach dem Verfahren gemäß der vorliegenden Erfindung arbeitet.

Gleiche oder ähnliche Ausgestaltungen, Elemente oder Merkmale sind in Fig. 1 und in Fig. 2 mit identischen Bezugszeichen versehen.

### Bester Weg zur Ausführung der vorliegenden Erfindung

In Fig. 2 ist ein Ausführungsbeispiel eines Flammenbrenners für autogene Verfahren bestimmten Vorrichtung, das heißt eines Flammbrenners 100 gemäß der vorliegenden Erfindung dargestellt.

Die anhand Fig. 2 veranschaulichte Art der Anordnung eines Brennerkopfs 10 ermöglicht einen kostengünstigen und effektiven Einsatz des Flammbrenners 100 beim gewünschten Autogenflammverfahren.

Der Flammbrenner 100 gemäß Fig. 2 zeichnet sich durch eine hohlzylinder- oder ringförmige Hüllgaseinrichtung 20 aus, die zum Führen eines Hüllgases H zwischen der Außenwand 12 des Brennerkopfs 10 und der Innenwand 22 der Hüllgaseinrichtung 20 bestimmt ist. Mit diesem Hüllgas H kann nach Art eines Gasvorhangs die am Gasaustrittsort 14 in Richtung des Bauteils B austretende Acetylen-Sauerstoff-Flamme F eingeschlossen werden, so dass die Flamme F konzentrierter auf den sich auf der Oberfläche des Bauteils B befindlichen Wirkpunkt P einwirken kann.

Aus der exemplarischen Darstellung gemäß Fig. 2 geht des Weiteren hervor, dass der dem Bauteil B zugewandte Endbereich 24 der Hüllgaseinrichtung 20 in Bezug auf den Gasaustrittsort 14 ein Stück vorsteht, um eine besonders intensive und stabile Abschottung der Flamme F zu erreichen. In Abhängigkeit von Art und Zweck des Flammprozesses ist dies jedoch nicht obligatorischer Bestandteil der vorliegenden Erfindung. So kann die Hüllgaseinrichtung 20 auch in etwa gleich lang wie der Brennerkopf 10 sein oder die Hüllgaseinrichtung 20 kann auch kürzer als der Brennerkopf 10 sein.

Im Zuge einer größtmöglichen Symmetrie der anhand Fig. 2 veranschaulichten Anordnung 100 ist die Hüllgaseinrichtung 20 in Bezug auf den Brennerkopf 10 so angeordnet, dass die Symmetrieachse der Hüllgaseinrichtung 20 mit der Symmetrieachse A des Brennerkopfs 10 zusammenfällt.

In einer beispielhaften Ausgestaltung für einen Einflammen-/Eindüsenbrenner oder auch eines Mehrdüsenbrenners ist anstelle des Brennerkopfs 10 ist eine Düse, aus welcher eine Flamme F austritt, in dem Flammbrenner 100 angeordnet.

Für den Erfolg des autogenen Prozesses ist die Leistungskraft des Brenngases von besonderer Bedeutung. Die sehr hohe Temperatur der Acetylen-Sauerstoff-Flamme F in Verbindung mit einer hohen Wärmeleistung der Acetylen-Sauerstoff-Flamme F ergibt einen maximalen Effekt, der sich in hoher Wirtschaftlichkeit und Effizienz niederschlägt.

Die Vorteile der vorliegenden Erfindung zeigen sich für alle Brenngase. Verschiedene Brenngase werden beispielsweise in der Norm EN ISO 5172 genannt, wenn auch die Aufzählung dort nicht erschöpfend ist. Als Verbrennungspartner kann anstelle von Sauerstoff auch Druckluft eingesetzt werden. Die Brennergröße wiederum ist in Abhängigkeit von der Art des Werkstoffs B und/oder von der Dicke des Werkstoffs B zu wählen.

Die vorbeschriebenen Vorteile, zu denen insbesondere auch eine signifikante Herabsetzung der Schadstoffkonzentration im Brennerabgas und damit einhergehend eine Minimierung sowohl der gesundheitlichen Belastungen des Bedieners des Brenners und weiterhin eine vorteilhafte Gestalt der Flamme und damit einhergehend eine signifikante Verbesserung des Wärmeübergangs und damit eine spürbare Anhebung der Verfahrensgeschwindigkeit des autogenen Prozesses gehört, zeigen sich bei der vorliegenden Erfindung speziell in Kombination mit der Verwendung geeigneter Hüllgase, wie etwa Argon, Sauerstoff, Kohlendioxid, Helium, Stickstoff und Wasserstoff und deren Mischungen, wie spezielle Mischungen, die als Formiergase oder Schweißschutzgase bekannt sind.

### Bezugszeichenliste

- 100: Zum Be- oder Verarbeiten des Bauteils oder Werkstoffs oder Werkstücks B mittels autogener Prozesse vorgesehene Vorrichtung
- 10: Brennerkopf
- 12: Außenseite oder Außenwand des Brennerkopfs 10
- 14: Ende oder Endbereich des Brennerkopfs 10, insbesondere Gasaustrittsort
- 20: Hüllgaseinrichtung oder Hüllstromeinrichtung
- 22: Innenseite oder Innenwand der Hüllgaseinrichtung 20
- 24: Ende oder Endbereich der Hüllgaseinrichtung 20
- A: Symmetrieachse des Brennerkopfs 10
- B: Bauteil oder Werkstoff oder Werkstück
- F: Flamme
- H: Hüllgas oder Vorhanggas
- P: Wirkpunkt, insbesondere Auftreffpunkt der Flamme F auf dem Bauteil oder Werkstoff oder Werkstück B
- S: Oberfläche des Bauteils oder Werkstoffs oder Werkstücks B

## Patentansprüche

1. Mindestens einer Düse oder einem Brennerkopf (10) einer zum Be- oder Verarbeiten mindestens eines Bauteils oder Werkstücks (B) mittels autogener Prozesse vorgesehenen Vorrichtung (100) zuordbare Hüllgaseinrichtung (20) zum Führen mindestens eines Hüllgases (H), mit dem mindestens eine aus der Düse oder dem Brennerkopf (10) in Richtung des Bauteils oder Werkstücks (B) austretende Flamme (F) zumindest teilweise umhüllbar ist.

2. Hüllgaseinrichtung gemäß Anspruch 1, **dadurch gekennzeichnet, dass** es sich beim im Zwischenraum zwischen der Außenwand (12) der Düse/des Brennerkopfs (10) und der Innenwand (22) der Hüllgaseinrichtung (20) geführten Hüllgas (H) um mindestens ein Gas oder eine Gasmischung aus der Gruppe der Gase Argon, Sauerstoff, Kohlendioxid, Helium, Stickstoff und Wasserstoff handelt.

3. Hüllgaseinrichtung gemäß Anspruch 1 oder 2, **dadurch gekennzeichnet, dass** Hüllgaseinrichtung hohlzylinderförmig ist.

4. Hüllgaseinrichtung gemäß mindestens einem der Ansprüche 1 bis 3, **dadurch gekennzeichnet, dass** der dem Bauteil oder Werkstück (B) zugewandte Endbereich (24) der Hüllgaseinrichtung (20) in Bezug auf den dem Bauteil oder Werkstück (B) zugewandten Endbereich (14) der Düse/des Brennerkopfs (10) etwas übersteht.

5. Hüllgaseinrichtung gemäß mindestens einem der Ansprüche 1 bis 4, **dadurch gekennzeichnet, dass** die Hüllgaseinrichtung (20) in Bezug auf die Düse/den Brennerkopf (10) so angeordnet ist, dass die Mittelachse der Hüllgaseinrichtung (20) mit der Symmetrieachse (A) der Düse/des Brennerkopfs (10) im Wesentlichen zusammenfällt.

6. Hüllgaseinrichtung gemäß mindestens einem der Ansprüche 1 bis 5, **dadurch gekennzeichnet, dass** mittels des Hüllgases (H) die im Abgas der Vorrichtung (100) enthaltene Schadstoffkonzentration, insbesondere die Konzentration an Stickoxiden (NOₓ), reduzierbar ist.

7. Hüllgaseinrichtung gemäß mindestens einem der Ansprüche 1 bis 6, **dadurch gekennzeichnet, dass** mittels des Hüllgases (H) die Prozessgeschwindigkeit des autogenen Prozesses um mindestens ein Drittel, vorzugsweise um mindestens die Hälfte verringerbar ist.

8. Zum Be- oder Verarbeiten mindestens eines Bauteils oder Werkstücks (B) mittels autogener Verfahren vorgesehene Vorrichtung (100) mit mindestens einer Düse/einem Brennerkopf (10),
**gekennzeichnet durch**
mindestens eine Hüllgaseinrichtung (20) gemäß mindestens einem der Ansprüche 1 bis 7.

9. Vorrichtung gemäß Anspruch 8, **gekennzeichnet durch** eine Ausgestaltung
- als Einflammen- oder Eindüsenbrenner, bei dem der Düse eine Hüllgaseinrichtung zugeordnet ist,
- als Flammenbrenner, bei dem viele kleine Einzelflammen eine aus dem Brennerkopf (10) austretende Flamme (F) bilden, dem Brennerkopf (10) eine Hüllgaseinrichtung (20) zugeordnet ist,
- als Mehrdüsenbrenner, bei dem jeder Düse jeweils eine Hüllgaseinrichtung zugeordnet ist, oder
- als Sonderbrenner, bei dem Brennerkopf eine Hüllgaseinrichtung zugeordnet ist.

10. Verfahren zum Be- oder Verarbeiten mindestens eines Bauteils oder Werkstücks (B) mittels autogener Prozesse,
**dadurch gekennzeichnet,**
**dass** mindestens eine aus der Düse/dem Brennkopf (10) in Richtung des Bauteils oder Werkstücks (B) austretende Flamme (F), zumindest teilweise mit mindestens einem Hüllgas (H) umhüllt wird.

11. Verwendung mindestens einer Hüllgaseinrichtung (20) gemäß mindestens einem der Ansprüche 1 bis 7 und/oder mindestens einer Vorrichtung (100) gemäß Anspruch 8 oder 9 in der Autogentechnik.

12. Verwendung gemäß Anspruch 11 beim Be- oder Verarbeiten des Bauteils oder Werkstücks (B) mittels Flammrichten, mittels Brennschneiden, mittels Flammwärmen, mittels Flammlöten oder mittels Fugenhobeln.
